# EUROPEAN PATENT SPECIFICATION

(11) **EP 1 173 979 B1**
(45) Date of publication and mention of the grant of the patent: **19.03.2003**
(21) Application number: 00922186.2
(22) Date of filing: 14.04.2000
(51) Int. Cl.: H04N 7/18

(54) **METHOD AND APPARATUS TO OVERLAY COMPARATIVE TIME DETERMINED POSITIONAL DATA IN A VIDEO DISPLAY**
VERFAHREN UND GERÄT ZUR ÜBERLAGERUNG VERGLEICHENDER, ZEITBESTIMMTER POSITIONSDATEN IN EINER VIDEOANZEIGE
PROCEDE ET APPAREIL POUR SUPERPOSER SUR UN ECRAN VIDEO DES DONNEES DE POSITION COMPAREES DETERMINEES PAR LE TEMPS

(30) Priority: 16.04.1999 US 129812 P
(43) Date of publication of application: 23.01.2002
(73) Proprietor: Princeton Video Image, Inc., Lawrenceville, NJ 08648 (US)
(72) Inventor: ROSSER, Roy, Lawrenceville, NJ 08648 (US)
(74) Representative: Garratt, Peter Douglas
(86) International application number: US0010012
(87) International publication number: WO00064176

(56) References cited:
- WO-A-98/18261
- DE-A- 4 135 385
- DE-A- 4 141 397
- US-A- 5 566 251

## Description

### Background of the Invention

### Field of the Invention

This invention relates to displaying comparative time-related positional data during video broadcasts or other forms of display of events in which competitors compete over the same course at different times; and in particular to means of showing video viewers how the competitors are performing relative to each other even though they are not competing over the same region of the course at the same time.

### Related Art

Certain sporting events, such as downhill and slalom skiing, cycling time trials and auto-race qualifying, are run against the clock. Competitors typically compete by being individually timed over the same course to see who can cover the course in the shortest elapsed time. In televising these types of events, broadcasters typically show the elapsed time of the current competitor as a graphic overlay on the television picture. One way in which they make the competition more meaningful to the audience is to display how far behind or ahead of the leader the current competitor is at certain key timing points, such as the halfway mark. These points are often referred to as "split times". A shortcoming of this approach is that the viewer only has a real sense of how the competitor is faring in the competition at those key positions when the time difference between the leader and the current competitor is available for display and there are a limited number of those positions, typically only one or two.

### Summary of the Invention

The current invention aims to show in a graphic and continuous way, the relation between the current competitor and some previous competitor as they perform over an event course or portion of a racecourse. In most applications, the previous competitor would be the current event leader, but in practice it could be any previous competitor on whom data has been recorded or calculated performing on the same course or a similar course that could be extrapolated to match the current event course, including but not limited to a current or former record holder, a former title holder, the current competitor in a previous run or year, or even a fictitious competitor performing according to some bio-physical model or set of computations.

There are two basic steps to implementing the invention. First, a record of a first competitor, whether it be the current leader or any previous competitor, must be developed by monitoring the first competitor's position as a continuous function of elapsed time, and storing the information in an easily recalled way. This makes it possible to give a continuously updated display of how far ahead or behind the leader the current competitor is. The second step is to then use a Live Video Insertion System to display the information in a form that is graphic and makes compelling television. A Live Video Insertion System is described in detail in U.S. Patent US-A-5,264,933 to Rosser *et al.* . An example of one such graphic and compelling display would be to have an object such as a very visible dot, or other suitable graphic object or icon, continuously show where the first competitor would have been in the live shot of the current competitor. The graphic overlay could also be an image of the current leader shown in some stylized way such as with inverted coloring or ghosting.

The first competitor, or graphic icon representing that competitor, could be used as a broadcast enhancement, or an advertiser could sponsor it.

The present invention is applicable to any event where competitors perform over substantially the same conditions. In addition to use in skiing, auto-racing, and cycling, as described above, the present invention could be used in other events including, but not limited to, track-and-field, swimming, speed skating, or even golf. In golf, for example, a previous competitor's shot could be shown simultaneously with the present competitor's shot, using enhanced graphics to distinguish the two. Even a past champions shots could be shown by examining old film or video footage of the performance.

### Brief Description of the Figures

The foregoing and other features and advantages of the invention will be apparent from the following, more particular description of a preferred embodiment of the invention, as illustrated in the accompanying drawings, where:
Fig. 1 is a flowchart showing an overview of a method for showing a ghost competitor icon during a current competitor's live video.
Fig. 2 is a schematic drawing showing how a ghost competitor icon could be implemented during a skiing competition;
Fig. 3a shows a schematic of a data storage structure for recording object or competitor information;
Fig. 3b shows a schematic of a data storage structure for recording camera location data; and
Fig. 3c shows a schematic of a data storage structure for recording camera data for use in replays and post production.

### Detailed Description of the Preferred Embodiments

A preferred embodiment of the present invention is now described with reference to the figures where like reference numbers indicate identical or functionally similar elements. While specific configurations and arrangements are discussed, it should be understood that this is done for illustrative purposes only. A person skilled in the relevant art will recognize that other configurations and arrangements can be used without departing from the scope of the invention. It will be apparent to a person skilled in the relevant art that this invention can also be employed in a variety of other devices and applications.

In particular, the present invention will be described using a ski event as an example. As explained above, and as will be apparent to a person skilled in the relevant art, the methods and apparatuses described can be applied equally to any event in which competitors compete one at a time or in sequence over a predefined or similar course, including, but not limited to cycling, athletics, auto racing, skiing, speed skating, in-line skating, street luge, luge, golf or bobsledding. It can also be applied to events in which competitors compete over a predefined course, but in different lanes, such as track events, swimming, horse racing, etc. The present invention can also be utilized for events such as rowing, for example, the Oxford Cambridge boat race or the Henley regatta, in which although there are two competitors racing over the same course, often the event becomes one sided after a very short time. Such events could be made more interesting for television viewers if an icon could be inserted showing how the current leaders are doing compared with a previous year's competitors or winners. Even in multi-competitor events such as track or swimming races, it would be of interest to the viewers to see where a previous year's winner or the current world, Olympic or national record holder would be at all stages in the current event. Golf is another such example, where the shots of competitors could be overlaid onto the live video of the current competitor's shots. Even the shots taken by past great golfers at the same hole could be shown against each other or against the current contender. The present invention can also be used to visually and graphically compare one golfer's swing with the appropriately scaled and timed swings of other golfers, if the competitor is fitted with an appropriate monitoring setup. Further, in motor racing events such as Formula 1, as the race progresses and the contestants become strung out around the track, the ghost concept could be used to show how any of the trailing competitors is doing in terms of making or losing ground compared to how the race leader performed over the same parts of the course the last time he went over them.

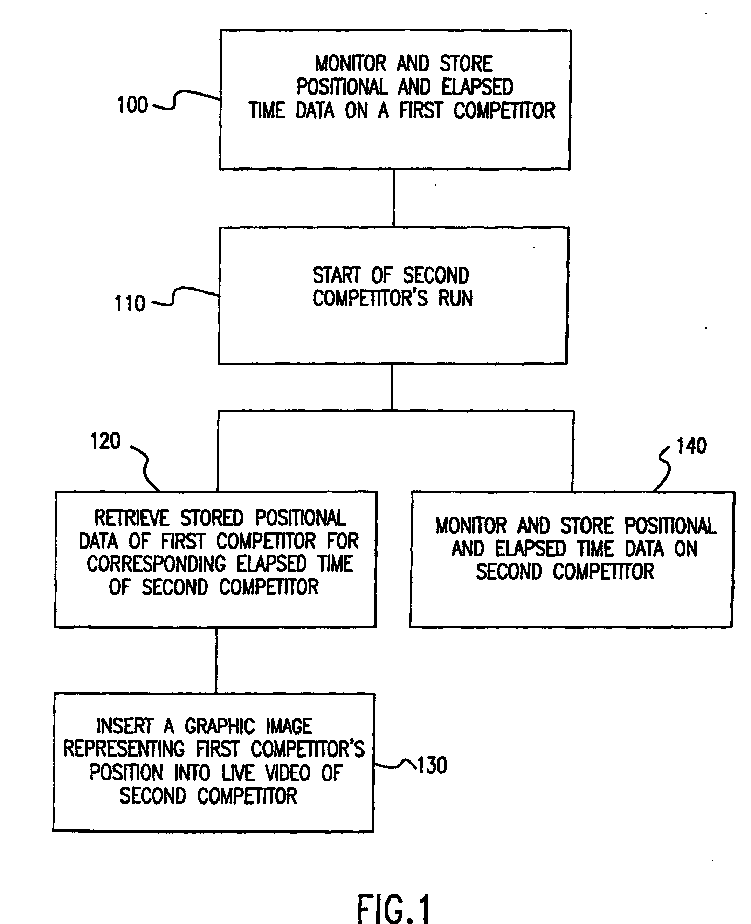

The general overview of a preferred method for overlaying comparative time determined positional data on a video display will be explained in accordance with Fig. 1. Fig. 1 shows a flow chart of a preferred method of the present invention. In this preferred method, block **100** represents the step of obtaining, recording, and storing positional and time elapsed data of a first competitors run along a course. Details of how this positional and time date is obtained, recorded, and stored will be discussed in more detail below, however, the basic concept provides that for every small fraction of time elapsed during the first competitor's run, the position of the first competitor along the course is recorded and stored. Block **110** represents the start of the second competitor's run along the same course as the first competitor. This start triggers a time elapsed clock for the second competitor. As the second competitor's run is being shown live, block **120** represents retrieving the stored positional data of the first competitor for the corresponding elapsed time of the second competitor. Therefore, if the second competitor is exactly ten (10) seconds into the run, the position of the first competitor at ten (10) seconds into his/her run is retrieved from storage. Block **130** represents the step of inserting a graphic image of the position of the first competitor into the live video shot of the second competitor. The position of the first competitor retrieved from storage is calibrated to the field of view of the camera or cameras recording the second competitor's run along the course. Using this data, the position of the first competitor within the screen can be located precisely. Known video insertion techniques are then used to insert a graphic image of the first competitor into the live video of the second competitor.

Simultaneously with the live video of the second competitor and the insertion of a graphic image of the first competitor in the live video of the second competitor, the positional and time elapsed data of the second competitor is obtained, recorded and stored, as represented by block **140**, similar to block **100** for the first competitor. This data is stored in case the second competitor becomes the race leader, or if for some other reason the broadcaster wants to insert the second competitor's positional data into the live video of a third or subsequent competitor.

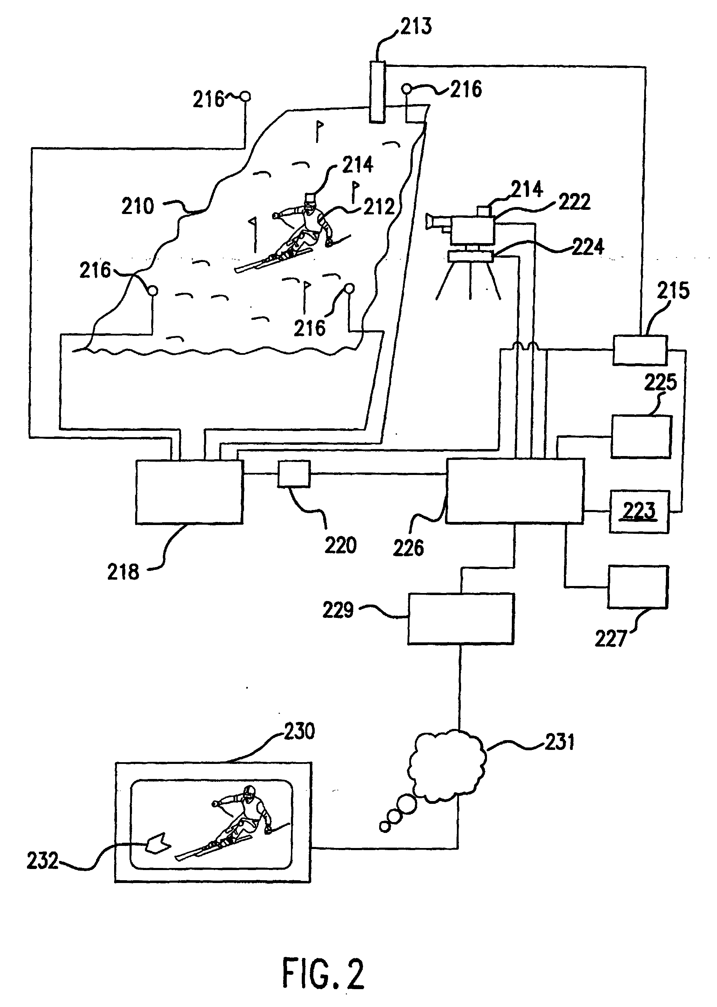

The implementation of the invention as generally described above will be explained in detail referring to Fig. 2, which shows a ski course **210** on which a competitor **212** is competing and the event is being televised.

In a preferred embodiment of the invention, competitor **212**'s position in three dimensions is tracked in real time using a radio frequency (RF) local area multiple object tracking system. Such RF local area multiple object tracking systems are well known as discussed in International Application No. PCT/US98/03866 (published as Publication No. WO 98/37932) to Waddell *et al.,* and in U.S. Patent Nos. US-A-5,438,518 and US-A-5,513,854. Typically such systems consist of a well-known lightweight RF transmitter and antenna **214** worn by competitor **212**. Such transmitters and antenna **214**, including batteries, usually weigh only a few ounces and use well known spread spectrum technology to reduce power requirements and for efficacy in noisy RF environments. The signal from competitor **212**'s transmitter **214** is picked up by a plurality of RF receivers **216** stationed in fixed locations around the course or arena in which the event is taking place. The signals received by the receivers **216** from the transmitter **214** are relayed back to a central processing station **218**, which may be a general-purpose computer programmed for the task. Using the different times of transit of signal to the different receivers, and knowing the locations of the receivers, it is possible to calculate the location of the transmitter using well known algorithms and methods as discussed in detail in the Waddell *et al.* application referenced above and the references mentioned therein. Central processing station **218** uses the signals received to compute the three-dimensional position of competitor **212**, or more precisely, the competitor's transmitter **214**, typically accurate to a within few centimeters and taken up to sixty times per second. The data recording competitor **212**'s position is then stored in a suitable storage unit **220,** which is typically a commercially available magnetic disk storage disk.

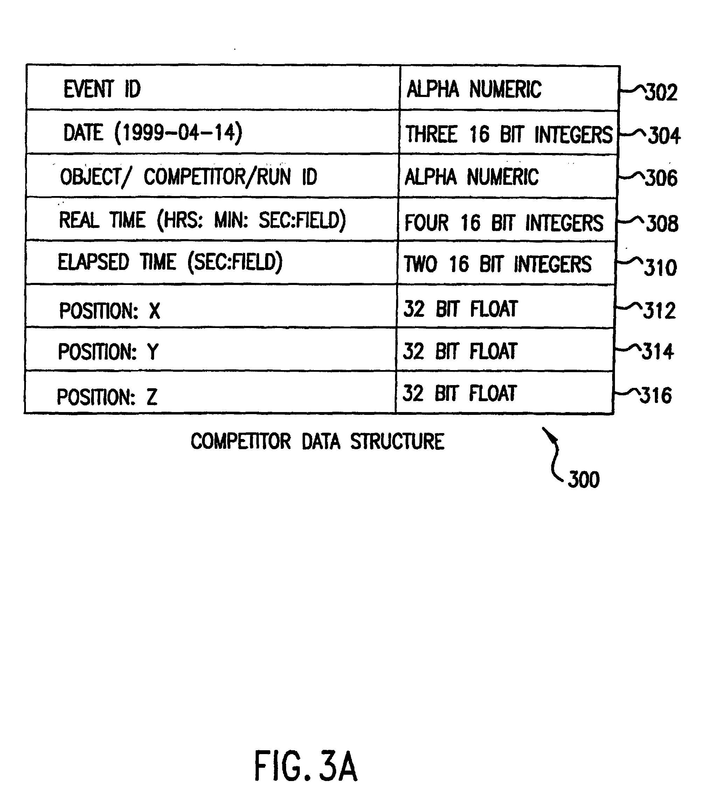

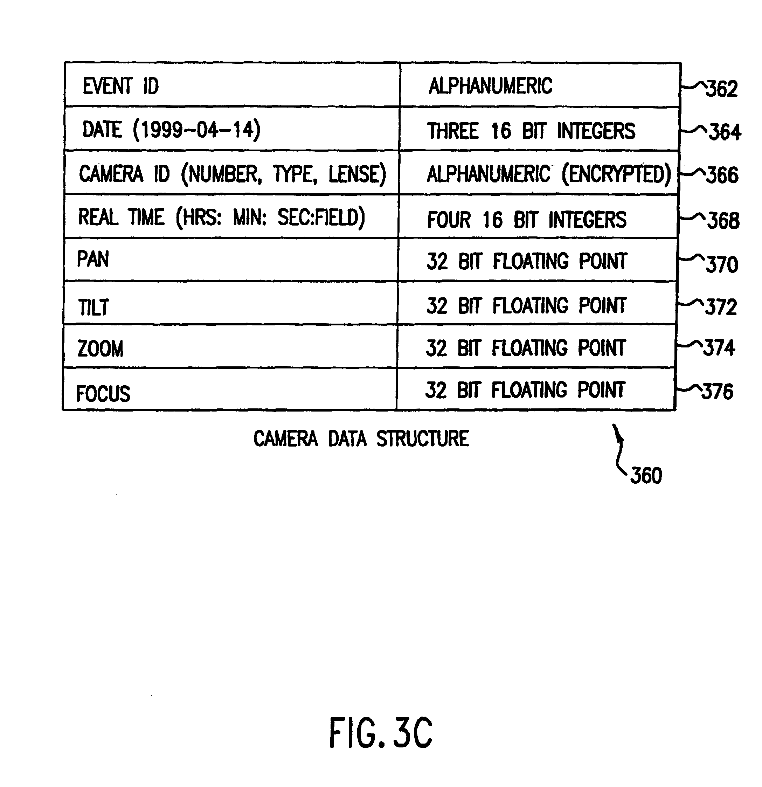

A typical competitor data structure **340** of the information stored regarding competitor **212** in storage unit **220** is shown schematically in Fig. 3a. Although there may be other, possibly more compact storage structures that will work, structure **300** represents the type of information that should be stored about the moving object or competitor, preferably at up to sixty times a second in order to have data with every field of NTSC video. Obviously if data is stored at lower data rates, positional data for any given field of video could be estimated by interpolation between stored data elements. The first item field **302** is a general event identification name or number, which may also encode the type of event being covered, the structure to be expected and the units each item will be stored in. Field **304** is the date of the event. Field **306** is an object or competitor identification name or number which may also include the particular run in a multi-run contest. Field **308** records the real time of day, which may be recorded in the standard broadcasting time of hours, minutes, seconds, frames of video and which field or may simply be the time of day accurate to hundredths of a second. Field **310** stores the elapsed time, which would typically be the time accurate to video fields or hundredths of a second from some timing fiducial such as the start of that competitor's run. An alternate method would be to record the start time in field **310** and calculate elapsed time by measuring the difference between the start time and the data time to calculate the elapsed time for that data set. Fields **312**, **314** and **316** then store the instantaneous positional data about that competitor or object. The units for the positional data is predefined and encoded either in its own storage or in one of the identification names associated with the data. The scale, orientation and zero point of the data are effectively defined by the camera location data storage structure **320**. Other three dimensional coordinate systems, such as the well known polar or radial coordinates, could also be used to store the data to equal effect, as would be understood by one of ordinary skill in the relevant art.

Once the positional and time elapsed data for a first competitor **212** has been recorded and stored, a second competitor **212** starts a run along the same course as the first competitor. In a preferred embodiment of the invention, a camera **222** or a plurality of cameras **222** are used to televise the event. Cameras **222** are equipped with camera sensors **224** which monitor the pan, tilt, zoom and focus of each camera **222**. Such sensors are well known in the art and are discussed, for example, in co-pending International Application No. WO-A-98/24242. Typically, camera sensors **224** comprise commercially available optical encoders, as supplied for instance by the Thoma company of Germany, which measure the pan and tilt of the camera with respect to a fixed tripod base. Additionally, zoom and focus data can be obtained directly from the drive mechanism of broadcast lenses. With calibration, this zoom and focus data can be interpreted with the data from the pan and tilt sensors to give the precise field of view of the camera, as described in detail in the aforementioned co-pending International Application No. WO-A-98/24242 or in pending International Application No. PCT/US96/11122 (International Publication No. WO-A-97/02699) to Honey *et al*.

In the preferred embodiment of the invention information from the camera sensors **224** is fed back along with the video feed from the camera or cameras **222** to a live video insertion system **226**. Live video insertion systems are well known and are described in detail in U.S. Patent Nos. US-A-5,264,933, US-A-5,543,856 and US-A-5,627,915 to Rosser *et al.*. Live video insertion systems are also described in the aforementioned co-pending International Application No. WO-A-98/24242 Live video insertion systems generally operate on digital video, so if necessary, a first step is to convert the video into a digitized format. The system precisely determines the position within a field of the video in which an indicia will be inserted. Pattern recognition, as described in more detail below, may be used to aid in locating the insertion position. Next, the system determines if the indicia will occlude the object of interest within the video and, if so, appropriate occlusion masks are generated. The insertion indicia (e.g., icon or logo) is then warped to the correct size. The insertion indicia is then merged with the video, using any necessary occlusion masks, and the video is converted back to its original format.

In a preferred embodiment of the present invention, the information from camera sensors **224** is fed back into live video insertion system **226** such that the field of view of the live feed from camera **222** is known. The positional data (from competitor data structure **300**) of the first competitor corresponding to the exact elapsed time of the second competitor is retrieved. The positional data from the first competitor and the data regarding the field of view of camera **224** are correlated such that the position of the first competitor is known within the field of view of camera **224**. Using known live video insertion systems, the position of the first competitor is inserted into the live feed for the second competitor. Therefore, for every frame of NTSC video, the second competitor is shown live and the position of the first competitor is inserted into the video using a ghost competitor icon **232**, thereby showing the viewers the position of the current competitor with respect to the previous competitor, such as the race leader.

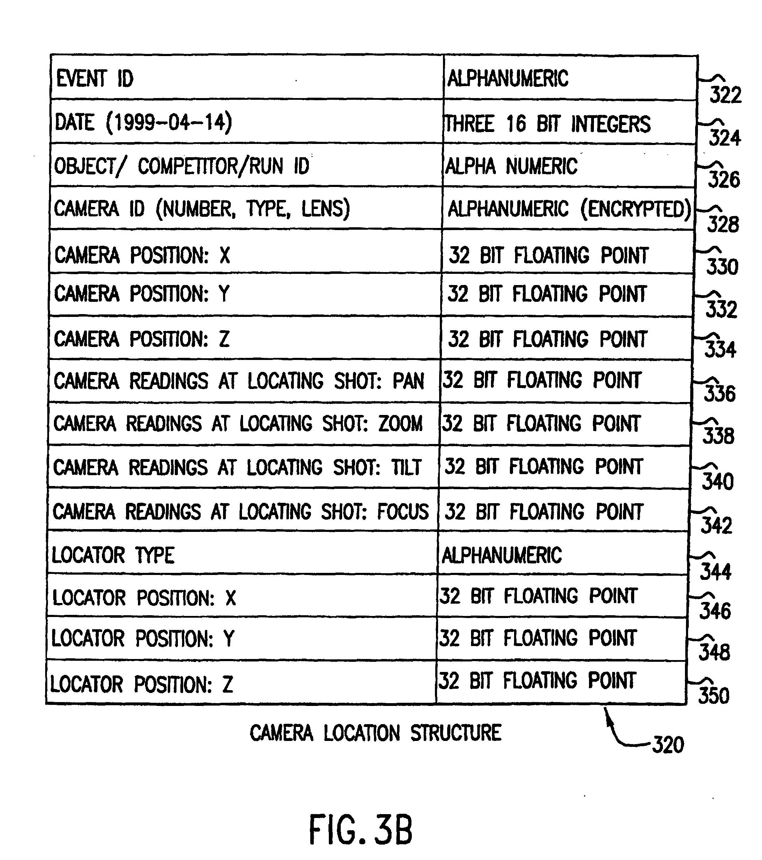

The data from the camera sensors is stored in a camera location data storage structure **320** as shown schematically in Fig. 3b. Camera location data storage structure **320** stores setup information about each camera **222** being used to televise the event on whose video stream ghost competitor icon **232** is going to inserted. Field **322** is a general event identification and field **324** is the date of the event. These fields are equivalent to fields **302** and **304** of the competitor data structure **300** and are used to match up camera and competitor data files. Field **326** is used to store an identification which will link cameras **222** to a particular competitor or run in case camera locations are changed or the camera being used is movable. Field **328** is a camera identification name or number and may also have the camera and lens type and identification numbers coded in for accessing lens and camera calibration and characterization files that are used by the live video insertion system **226.** Fields **330, 332** and **334** store the camera location in the same frame of reference, including coordinate system, scale and units, that the object data in the matching object data file **300** is stored. Fields **336,338,340** and **342** store camera readings when the camera is set up to a standard locating shot, which may be of a standard reference object located in or alongside the event being televised. In the preferred embodiment, the fields **336,338,340** and **342** contain the pan, zoom, tilt and focus data of the camera in units that are normally used by the live video insertion system software. The final four fields of this data structure **344, 346, 348** and **350** contain data about the standard reference object. Field **344** contains the name and type of the locator, for example, a standard six-foot (1.83 meter) black and white vertical pole framed to fill screen vertically. Fields **346,348,** and **350** contain the x, y and z positions of the reference object. The purpose of recording the pan, zoom, tilt and focus of the camera in some pre-set shot as well as the x, y and z coordinates of the object which is being viewed in the preset shot is to establish a scale and orientation to allow translation from the coordinate system of the local area object tracking system and the image coordinate system used by the live video insertion system **226** being used to position the ghost competitor icon **232** correctly in the video being processed.

For fixed cameras, there is only one set of camera location data **320**. However, if handheld cameras are used and equipped with sensors that give instantaneous effective pan and tilt from a given orientation, zoom, focus and instantaneous x, y and z data, then the same data structure can be used to record camera location and orientation at every video field with the addition of one more field recording actual time of day.

Once the live video insertion system **226** has used the camera sensor data, either directly from camera **222** and camera sensor **224**, or in a replay, from the camera data storage unit **225** along with the recorded video from video recording unit **223** to insert the appropriate icon stored in icon storage unit **227** into the video stream, the video stream is sent to a production switching unit **229,** where it is mixed with the video and audio feeds from the other production cameras, recorders, microphones and graphics units, to produce the program. The program is then fed over distribution medium **231** to the viewers' video screen **230**. Video storage unit **223** may be, for example, a well known broadcast video tape recorder or broadcast quality video random access disk. Camera data storage unit **225** may be a well known digital hard disk or it may be stored as an integral part of storing the video, for example, by storing the data in the vertical blanking interval of the stored video. Distribution medium **231** may be any of the well known means of distributing video signals, including but not limited to radio frequency (RF) broadcast via transmitter towers or satellites, cable distribution via RF co-axial cable or optical fiber or over any suitable packet switching medium such as, but not limited to, streaming video over high bandwidth Internet connections.

Utilizing the present invention, the positional data of a previous competitor or run captured from the local area object tracking system by central processing station **218** is stored on data storage unit **220** to enable live video insertion system **226** to seamlessly insert a ghost competitor icon **232** into the live video stream so that a viewer looking at screen **230** sees graphically where that competitor would have been relative to the current competitor had they both been competing at the same time.

In order to provide a high quality integration of the previous competitors position into the live video of the current competitor, positional data from the previous run must be stored accurately and then synchronized with the current competitor's run. A preferred embodiment for synchronization is through a master timing clock **215**, which may be the standard black burst synchronization used in synching up broadcast video. This master timing signal or clock pulse is fed to both central processing station **218** used in recording the competitor's positions and live video insertion system **226**, as well as video recording unit **223**. Master timing clock **215** is also used to synchronize and relay the competitor or run start time from a start time device **213**. Start time device **213** may simply be a button pressed by an official or it could be the same timing start device used in the official timing of the event. For example, start timing device **213** may be a beam of light that is broken by the competitor as he/she starts, a gate that is pushed back as the competitor goes through it, or a pressure pad that senses the competitor leaving the starting position. Other timing devices could also be used, as will be apparent to one of ordinary skill in the art. The time the event or run starts is recorded in the competitor data structure **300** and the camera data structures **320** and **360** (described in more detail below) as well as the real time, all synchronized to master timing clock **215** so that ghost competitor icon **232** insertions can be accurately overlaid on each other with respect to elapsed time from start.

Having all the data for the both the previous competitor and the current competitor, the three dimensional position on the course of the previous competitor with respect to time elapsed from the start can be inserted into the live video of the current competitor using live video insertion system **226,** as discussed in detail in U.S. Patent Nos. US-A-5,264,933; US-A-5,543,856; US-A-5,627,915 and US-A-5,892,554 and co-pending U.S. Application US-A-6 100 925; Filed January 19, 1999. Ghost competitor icon **232** can be a video of the previous competitor or simply a representative icon, appropriately sized and oriented, with occlusion where applicable, and inserted using the standard algorithms and methods of live video insertion as discussed in detail in the aforementioned references.

The present invention can also be used for replays or using recorded footage. Fig. 3c shows a third data structure, camera data structure **360,** that is necessary if the insertion of ghost competitor icon **232** is going to be done on replays or if recorded footage is going to be used, partly or wholly as, or to create ghost competitor icon **232**, or if the insertion of ghost competitor icon **232** is going to be done in post-production on recordings of the event. Camera data structure **360** is a way of synchronizing video that is being recorded from a particular camera with the data recording the position of an object after the event is over. It is also useful in synchronizing video from a camera with the position data of an object in situations where there may be significant (multi-field) delays in either data or video stream due to the transmission path of the data, such as, but not limited to, the case when the camera feed may be being relayed via a tower or satellite because of structures or terrain problems. The camera data may be encoded with the video it is associated with in, for example, the vertical blanking interval of the video signal or by any of the well know methods for encoding data in video signals as mentioned in U.S. Patent US-A-5,543,856 to Rosser *et al.,* for example. Data field **362** stores the event identification name or number. Data field **364** stores the date. Data field **366** stores the camera identification name or number to allow synchronization of the camera data with the data stored in the camera location data structure **320**. Data field **368** stores the real time, so that the camera data can be synchronized with the competitor data in competitor data structure **300**. Data fields **370, 372, 374** and **376** are the camera pan, tilt, zoom and focus data, respectively.

In the preferred embodiment explained above, the competitor and camera locations in three-dimensional space are determined using sensors **214** attached to the competitor **212** and cameras **222** and receiving antenna **218** to record distance. An alternative preferred embodiment of recording competitor **212**'s position is to use sensors **224** fitted on cameras **222.** The camera operators in this embodiment must keep a part of the competitor at a cross hair or within a tightly defined box on the screen. The pan, tilt, zoom and focus data from a single camera at a given location can be used to determine where on a video image an object is, as discussed in detail in co-pending U.S. Application No. US-A-6100925; filed January 19, 1999, referenced above, and can be used to give the competitor's position with good accuracy in events where the competitors take a well defined line or stay within well defined lines, as is the case in most competitive sports. In this alternative embodiment, the first or previous competitor's positional data will still be stored in competitor data structure **300**. However, this information is obtained from camera sensors **224** instead of the local area object tracking system. This embodiment eliminates the need for any transmitter **214** on the competitor, which may be important in events such as swimming and track and field, where only a few additional ounces may affect the competitor's performance. This embodiment also avoids costly set up of an RF local area object tracking system, which require receiver **216** and costly pre-event calibration. When using cameras **222** with sensors **224** to record the position of the competitors, the accuracy of the positional data can be improved by using. multiple cameras **222.** Using multiple cameras **222** also provides three-dimensional positioned data for the competitor.

When using cameras **222** to capture the competitor's location data, it is important for accuracy purposes that the camera operators keep competitor **212** within the cross-hairs or defined box of camera **222**. In order to improve the accuracy of the location data captured by camera sensors **224**, known pattern recognition techniques can be used. Pattern recognition techniques are disclosed, for example, in U.S. Patent US-A-5,808,695 and International Application No. WO-A-98/24243. Using this feature, a well defined portion of the competitor, for example a portion of a car in an auto race, will be identified for pattern recognition. If the cross-hairs of camera **222** trails or lags this defined portion, the system will utilize pattern recognition to record the correct location of the competitor even though the cross-hairs are not aligned exactly with the competitor. This provides for more accurate data capture of the competitor's location.

Such known pattern recognition algorithms can also be used to aid in the seamless insertion of the ghost competitor icon **232** into the live video to make it look as if the added indicia is a part of the original scene. In this embodiment of the invention, the camera sensor data is used as the search part of the live video insertion system, providing an initial starting point or location for the insertion of indicia. After the search phase, the indicia is maintained in the correct size shape and perspective to make it appear to be part of the original video scene by pattern recognition algorithms. Such algorithms are well known and are discussed in previously cited U.S. Patent US-A-5,808,695 and International Application No. WO-A-98/24243.

The present invention can also be used in multilane events such as swimming or track events. In these events, the lane the competitor on whom data is being collected would have to kept, and the distance from camera to the lanes would have to be calibrated. In events where the, competitors run in staggered lanes, such as the 200 and 400 meter sprint events in track and field, the lane number would also be important regardless of how the positional data is collected. The lane and stagger would then need to be calculate as an off-set in positioning ghost competitor icon **232**.

In another embodiment of the invention, the insertion of ghost competitor icon **232** could start as an image of a person or an object and morph or change into an icon. For instance, in a specific sporting event, an image of the current world record holder could appear as an insert at the start of the event. The image of the record holder could then be transformed into an icon which is then used to show the position of the world record holder during the event that is subsequently shown. As will be apparent to one of ordinary skill in the art, this morphing could take place at any time during the event. Ghost competitor icon **232** could also be used for advertising by using a logo, or it could morph into a logo at certain stages of the event.

Ghost competitor icon **232** could also be inserted downstream, similar to the indicia being inserted at a downstream location as discussed in detail in U.S. Patent US-A-5,543,856 filed. In particular, the data required for downstream insertion could be made available as a data bank to an end user, accessible or downloadable over the internet, so that the viewer could choose what or whom to overlay when watching the event broadcast over the internet on streaming video or on a digital receiver with access to the internet or networked to a computer that has access to the data base.

If ghost competitor icon **232** is inserted in streaming video for distribution over the internet or other similar interactive media, the ghost insertion could be a hot button. In particular, the hot button ghost competitor could be a link to a home page that has details about, for instance, the competitor, or the record setting event that it is representing or the commercial sponsor. The hot button ghost competitor, when activated, could change the current insertion, or bring up a new web page with information or video or change the current streaming video.

Alternatively, insertion of ghost competitor icon **232** could be done at the viewer's set top receiving device so that the viewer has the choice of having it displayed or not.

If ghost competitor icon **232** is inserted in video for distribution in some multimedia recording format, for example, well known DVD format, ghost competitor icon **232** could be a hot link to another part of the recording medium, which could bring up video or information about the competitor, the record setting event or some associated commercial sponsor, for example.

While the invention has been particularly shown and described with reference to preferred embodiments thereof, it will be understood by those skilled in the art that various changes in form and details may be made therein without departing from the scope of the invention. Thus the breadth and scope of the present invention should not be limited by any of the above-described exemplary embodiments, but should be defined only in accordance with the following claims and their equivalents.

## Claims

1. A method of enhancing a broadcast of a sporting event, comprising the steps of:
a) monitoring and storing a position of a first competitor in a sporting event with respect to time using camera sensor data, wherein said stored position at each unit in time is stored in a separate data structure;
b) receiving a video image from a camera, wherein a second competitor is within a field of view of said camera;
c) acquiring camera sensor data from said camera while said second competitor is within a field of view of the camera, said camera sensor data representing the position and orientation of said field of view of said camera;
d) retrieving said stored position of said first competitor for the corresponding time that has elapsed since the second competitor has started said sporting event; and
e) inserting an indicia into said video image based on said stored position data of said first competitor and said field of view of said camera.

2. The method of claim 1, wherein the position of the first competitor stored in step (a) is stored sixty times per second, and wherein said separate data structure includes a time of day field, an elapsed time field, and positional data fields.

3. The method of claim 1, further comprising creating a second data structure that stores a location of said camera prior to the start of said event, wherein said second data structure includes a camera location field, pan, zoom, tilt and focus fields, and a plurality of fields relating to a standard reference object.

4. The method of claim 3, further comprising storing a plurality of data structures identical to said second data structure, wherein said plurality of data structures represent the multiple positions of a handheld camera.

5. The method of claim 1, further comprising the step of monitoring and storing a position of said second competitor in the sporting event with respect to the time using said camera sensor data, wherein said stored position at each unit in time is stored in a separate data structure.

6. The method of claim 1, wherein the step of inserting an indicia into said video image comprises utilizing a live video insertion system.

7. The method of claim 1, wherein said indicia is an icon.

8. The method of claim 7, wherein said icon includes sponsorship information.

9. The method of claim 1, wherein said indicia is a ghost image of said first competitor.

10. The method of claim 1, wherein said video image is transmitted through a video stream to the internet.

11. The method of claim 10, wherein said indicia comprises a hot button.

12. The method of claim 11, wherein when said hot button is activated by a viewer, information about the first competitor is displayed.

13. The method of claim 11, wherein when said hot button is activated by a viewer, information about a sponsor is displayed.

14. The method of claim 1, wherein said indicia morphs from an icon to an image.

15. The method of claim 1, wherein said indicia morphs from an image to an icon.

16. An apparatus for enhancing a broadcast of a sporting event, comprising:
a camera including camera sensors, said camera tracking a first competitor and said camera sensors monitoring the pan, tilt, zoom, and focus of said camera to monitor and store a position of said first competitor with respect to time, wherein said stored position at each unit in time is stored in a separate data structure;
means for receiving a video image from said camera when a second competitor is within a field of view of said camera, said camera sensors providing camera sensor data representative representing the position and orientation of a field of view of said camera;
means for retrieving the stored position of said first competitor for the corresponding elapsed time of said second competitor, and
means for inserting an indicia into said video image based on the position data of said first competitor and said field of view of said camera.

17. The apparatus of claim 16, wherein data is stored in said first data structure sixty times per second, and wherein said first data structure includes a time of day field, an elapsed time field, and positional data fields.

18. The apparatus of claim 16, further comprising means for creating a second data structure that stores a location of said camera prior to the start of said event, wherein said second data structure includes a camera location field, pan, zoom, tilt and focus fields, and a plurality of fields relating to a standard reference object.

19. The apparatus of claim 18, further comprising means for storing a plurality of data structures identical to said second data structure, wherein said plurality of data structures represent the multiple positions of a handheld camera.

20. The apparatus of claim 16, wherein said camera and said camera sensors monitor and store a position of said second competitor with respect to time, wherein said stored position at each unit in time is stored in a separate data structure.

21. The apparatus of claim 16, wherein said means for inserting an indicia into said video image comprises utilizing a live video insertion system.

22. The apparatus of claim 16, wherein said indicia is an icon.

23. The apparatus of claim 22, wherein said icon includes sponsorship information.

24. The apparatus of claim 16, wherein said indicia is a ghost image of said first competitor.

25. The apparatus of claim 16, wherein said video image is transmitted through a video stream to the internet.

26. The apparatus of claim 25, wherein said indicia comprises a hot button.

27. The apparatus of claim 26, wherein when said hot button is activated by a viewer, information about the first competitor is displayed.

28. The apparatus of claim 26, wherein when said hot button is activated by a viewer, information about a sponsor is displayed.

29. The method of claim 16, wherein said indicia morphs from an icon to an image.

30. The method of claim 16, wherein said indicia morphs from an image to an icon.

## Patentansprüche

1. Verfahren zur Verbesserung der Übertragung von Fernseh-, Internet- und Bildfunksendungen eines Sportereignisses, das die Schritte umfasst:
a) Kontrollieren und Speichern einer Position eines ersten Wettbewerbers in einem Sportereignis in Bezug auf die Zeit unter Verwendung von Kamerasensordaten, wobei die gespeicherte Position bei jeder Zeiteinheit in einer separaten Datenstruktur gespeichert wird;
b) Empfangen eines Videobilds von einer Kamera, wobei ein zweiter Wettbewerber in einem Sichtfeld der Kamera ist;
c) Erlangen von Kamerasensordaten von der Kamera während der zweite Wettbewerber in einem Sichtfeld der Kamera ist, wobei die Kamerasensordaten die Position und Ausrichtung des Sichtfelds der Kamera darstellen;
d) Abrufen der gespeicherten Position des ersten Wettbewerbers für die entsprechende Zeit, die vergangen ist, seit der zweite Wettbewerber das Sportereignis gestartet hat; und
e) Einführen eines Indicias bzw. einer Vorgabe in das Videobild, basierend auf den gespeicherten Positionsdaten des ersten Wettbewerbers und dem Sichtfeld der Kamera.

2. Verfahren gemäß Anspruch 1, bei dem die in Schritt (a) gespeicherte Position des ersten Wettbewerbers sechzig mal pro Sekunde gespeichert wird, und bei dem die separate Datenstruktur ein Tageszeitfeld, ein Feld für vergangene Zeit und Positionsdatenfelder aufweist.

3. Verfahren gemäß Anspruch 1, das weiterhin Erstellen einer zweiten Datenstruktur umfasst, die eine Stellung der Kamera vor dem Start der Veranstaltung bzw. des Ereignisses speichert, wobei die zweite Datenstruktur ein Kamerastellungsfeld, Schwenk-, Zoom-, Senkrechtschwenk- und Fokusfelder und eine Vielzahl von Feldern in Bezug auf ein Standardreferenzobjekt umfasst.

4. Verfahren gemäß Anspruch 3, das weiterhin Speichern einer Vielzahl von Datenstrukturen umfasst, die zu der zweiten Datenstruktur identisch sind, wobei die Vielzahl von Datenstrukturen die vielen Positionen einer Handkamera darstellen.

5. Verfahren gemäß Anspruch 1, das weiterhin den Schritt des Kontrollierens und Speicherns einer Position des zweiten Wettbewerbers in dem Sportereignis in Bezug auf die Zeit unter Verwendung der Kamerasensordaten umfasst, wobei die gespeicherte Position bei jeder Zeiteinheit in einer separaten Datenstruktur gespeichert wird.

6. Verfahren gemäß Anspruch 1, bei dem der Schritt des Einführens eines Indicias bzw. einer Vorgabe in das Videobild das Verwenden eines Livevideoinsertionssystems umfasst.

7. Verfahren gemäß Anspruch 1, bei dem das Indicia bzw. die Vorgabe ein Icon ist.

8. Verfahren gemäß Anspruch 7, bei dem das Icon Sponsorschaftsinformationen umfasst.

9. Verfahren gemäß Anspruch 1, bei dem das Indicia bzw. die Vorgabe ein Geisterbild des ersten Wettbewerbers ist.

10. Verfahren gemäß Anspruch 1, bei dem das Videobild durch einen Videostrom an das Internet übertragen wird.

11. Verfahren gemäß Anspruch 20, bei dem das Indicia bzw. die Vorgabe einen sogenannten Hot Button umfasst.

12. Verfahren gemäß Anspruch 11, bei dem, wenn der sogenannte Hot Button durch einen Zuschauer aktiviert wird und Informationen über den ersten Wettbewerber angezeigt werden.

13. Verfahren gemäß Anspruch 11, bei dem, wenn der sogenannte Hot Button durch einen Zuschauer aktiviert wird und Informationen über einen Sponsor angezeigt werden.

14. Verfahren gemäß Anspruch 1, bei dem sich das Indicia bzw. die Vorgabe von einem Icon zu einem Bild entwickelt.

15. Verfahren gemäß Anspruch 1, bei dem sich das Indicia bzw. die Vorgabe von einem Bild zu einem Icon entwickelt.

16. Vorrichtung zur Verbesserung der Übertragung von Femseh-, Internet- und Bildfunksendungen eines Sportereignisses, umfassend:
eine Kamera, einschließlich von Kamerasensoren, wobei die Kamera einen ersten Wettbewerber verfolgt und die Kamerasensoren das Schwenken, den Zoom, das Senkrechtschwenken und den Fokus der Kamera kontrolliert, um eine Position des ersten Wettbewerbers in Bezug auf die Zeit zu kontrollieren und zu speichern, wobei die gespeicherte Zeit bei jeder Zeiteinheit in einer separaten Datenstruktur gespeichert wird;
Mittel zum Empfangen eines Videobilds von der Kamera, wenn ein zweiter Wettbewerber in dem Sichtfeld der Kamera ist, wobei Kamerasensoren Kamerasensordaten bereitstellen, die die Position und Ausrichtung eines Sichtfelds der Kamera darstellen;
Mittel zum Abrufen der gespeicherten Position des ersten Wettbewerbers für die entsprechende vergangene Zeit des zweiten Wettbewerbers; und
Mittel zum Einführen eines Indicias bzw. einer Vorgabe in das Videobild, basierend auf den Positionsdaten des ersten Wettbewerbers und des Sichtfelds der Kamera.

17. Vorrichtung gemäß Anspruch 16, bei der Daten in der ersten Datenstruktur 60 mal pro Sekunde gespeichert werden und bei der die erste Datenstruktur ein Tageszeitfeld, ein Feld für vergangene Zeit und Postionsdatenfelder umfasst.

18. Vorrichtung gemäß Anspruch 16, die weiterhin Mittel zum Erstellen einer zweiten Datenstruktur umfasst, die eine Stellung der Kamera vor dem Start der Veranstaltung bzw. des Ereignisses speichert, wobei die zweite Datenstruktur ein Kamerastellungsfeld, Schwenk-, Zoom-, Senkrechtschwenk- und Fokusfelder und eine Vielzahl von Feldern in Bezug auf ein Standardreferenzobjekt umfasst.

19. Vorrichtung gemäß Anspruch 18, die weiterhin Mittel zum Speichern einer Vielzahl von Datenstrukturen umfasst, die zu der zweiten Datenstruktur identisch sind, wobei die Vielzahl von Datenstrukturen die vielen Positionen einer Handkamera darstellen.

20. Vorrichtung gemäß Anspruch 16, bei der die Kamera und die Kamerasensoren eine Position des zweiten Wettbewerbers in dem Sportereignis in Bezug auf die Zeit unter Verwendung der Kamerasensordaten kontrollieren und speichern, wobei die gespeicherte Position bei jeder Zeiteinheit in einer separaten Datenstruktur gespeichert wird.

21. Vorrichtung gemäß Anspruch 16, bei der die Mittel zum Einführen eines Indicias bzw. einer Vorgabe in das Videobild das Verwenden eines Livevideoinsertionssystems umfasst.

22. Vorrichtung gemäß Anspruch 16, bei der das Indicia bzw. die Vorgabe ein Icon ist.

23. Vorrichtung gemäß Anspruch 22, bei der das Icon Sponsorschaftsinformationen umfasst.

24. Vorrichtung gemäß Anspruch 16, bei der das Indicia bzw. die Vorgabe ein Geisterbild des ersten Wettbewerbers ist.

25. Vorrichtung gemäß Anspruch 16, bei der das Videobild durch einen Videostrom an das Internet übertragen wird.

26. Vorrichtung gemäß Anspruch 25, bei der das Indicia bzw. die Vorgabe einen sogenannten Hot Button umfasst.

27. Vorrichtung gemäß Anspruch 26, bei der, wenn der sogenannte Hot Button durch einen Zuschauer aktiviert wird, Informationen über den ersten Wettbewerber angezeigt werden.

28. Vorrichtung gemäß Anspruch 26, bei der, wenn der sogenannte Hot Button durch einen Zuschauer aktiviert wird, Informationen über einen Sponsor angezeigt werden.

29. Vorrichtung gemäß Anspruch 16, bei der sich das Indicia bzw. die Vorgabe von einem Icon zu einem Bild entwickelt.

30. Vorrichtung gemäß Anspruch 16, bei der sich das Indicia bzw. die Vorgabe von einem Bild zu einem Icon entwickelt.

## Revendications

1. Procédé pour améliorer la télédiffusion d'un événement sportif, comprenant les étapes consistant à:
a) surveiller et mémoriser une position d'un premier concurrent dans un événement sportif par rapport au temps en utilisant des données de capteurs de prise de vue, dans lequel ladite position mémorisée pour chaque unité de temps est mémorisée dans une structure de données séparée;
b) recevoir une image vidéo provenant d'une caméra, dans laquelle un second concurrent est dans un champ de vision de ladite caméra;
c) acquérir des données de capteurs de prise de vue provenant de ladite caméra pendant que ledit second concurrent est dans un champ de vision de la caméra, lesdites données de capteurs de prise de vue représentant la position et l'orientation dudit champ de vision de ladite caméra;
d) récupérer ladite position mémorisée dudit premier concurrent pour la durée correspondante écoulée depuis que le second concurrent a démarré ledit événement sportif; et
e) incruster un timbre dans ladite image vidéo en fonction desdites données de position mémorisées dudit premier concurrent et dudit champ de vision de ladite caméra.

2. Procédé selon la revendication 1, dans lequel la position du premier concurrent mémorisée à l'étape (a) est mémorisée soixante fois par seconde, et dans lequel ladite structure de données séparée inclut un champ horaire, un champ de durée écoulée, et des champs de données de position.

3. Procédé selon la revendication 1, comprenant également une création d'une seconde structure de données qui mémorise un emplacement de ladite caméra avant le début dudit événement, dans lequel ladite seconde structure de données inclut un champ d'emplacement de caméra, des champs de panorama, de zoom, d'inclinaison et de foyer, et une pluralité de champs relatifs à un objet de référence standard.

4. Procédé selon la revendication 3, comprenant également une pluralité de structures de données identiques à ladite seconde structure de données, dans lequel ladite pluralité de structures de données représente des positions multiples d'une caméra portable.

5. Procédé selon la revendication 1, comprenant également l'étape de surveillance et mémorisation d'une position dudit second concurrent dans l'événement sportif par rapport au temps en utilisant lesdites données de capteurs de prise de vue, dans lequel ladite position mémorisée dans chaque unité de temps est mémorisée dans une structure de données séparée.

6. Procédé selon la revendication 1, dans lequel l'étape d'incrustation d'un timbre dans ladite image vidéo comprend l'utilisation d'un système d'incrustation vidéo en direct.

7. Procédé selon la revendication 1, dans lequel ledit timbre est un icône.

8. Procédé selon la revendication 7, dans lequel ledit icône inclut une information de parrainage publicitaire.

9. Procédé selon la revendication 1, dans lequel ledit timbre est une image fantôme dudit premier concurrent.

10. Procédé selon la revendication 1, dans lequel ladite image vidéo est transmise dans le réseau Internet par l'intermédiaire d'un train de données vidéo.

11. Procédé selon la revendication 10, dans lequel ledit timbre comprend un bouton surexposé.

12. Procédé selon la revendication 11, dans lequel lorsque ledit bouton surexposé est activé par un spectateur, une information concernant le premier concurrent est affichée.

13. Procédé selon la revendication 11, dans lequel lorsque ledit bouton surexposé est activé par un spectateur, une information concernant un parrain publicitaire est affichée.

14. Procédé selon la revendication 1, dans lequel ledit timbre se transforme morphologiquement d'un icône en une image.

15. Procédé selon la revendication 1, dans lequel ledit timbre se transforme morphologiquement d'une image en un icône.

16. Dispositif pour améliorer une télédiffusion d'un événement sportif, comprenant:
une caméra incluant des capteurs de prise de vue, ladite caméra effectuant une poursuite d'un premier concurrent et lesdits capteurs de prise de vue surveillant le panorama, l'inclinaison, le zoom, et le foyer de ladite caméra pour surveiller et mémoriser une position dudit premier concurrent par rapport au temps, dans lequel ladite position mémorisée pour chaque unité de temps est mémorisée dans une structure de données séparée;
des moyens pour recevoir une image vidéo provenant de ladite caméra lorsqu'un second concurrent est dans un champ de vision de ladite caméra, lesdits capteurs de prise de vue fournissant des données représentatives de capteurs de prise de vue représentant 1a position et l'orientation d'un champ de vision de ladite caméra;
des moyens pour récupérer la position mémorisée dudit premier concurrent pour la durée écoulée correspondante dudit second concurrent; et
des moyens pour incruster un timbre dans ladite image vidéo en fonction des données de position dudit premier concurrent et dudit champ de vision de ladite caméra.

17. Dispositif selon la revendication 16, dans lequel des données sont mémorisées soixante fois par seconde dans ladite première structure de données, et dans lequel ladite première structure de données inclut un champ horaire, un champ de durée écoulée, et des champs de données de position.

18. Dispositif selon la revendication 16, comprenant également des moyens pour créer une seconde structure de données qui mémorise un emplacement de ladite caméra avant le démarrage dudit événement, dans lequel ladite seconde structure de données inclut un champ d'emplacement de caméra, des champs de panorama, de zoom, d'inclinaison, et de foyer, et une pluralité de champs relatifs à un objet de référence standard.

19. Dispositif selon la revendication 18, comprenant également des moyens pour mémoriser une pluralité de structures de données identiques à ladite seconde structure de données, dans lequel ladite pluralité de structures de données représente les positions multiples d'une caméra portative.

20. Dispositif selon la revendication 16, dans lequel ladite caméra et lesdits capteurs de prise de vue surveillent et mémorisent une position dudit second concurrent par rapport au temps, dans lequel ladite position mémorisée pour chaque unité de temps est mémorisée dans une structure de données séparée.

21. Dispositif selon la revendication 16, dans lequel lesdits moyens pour incruster un timbre dans ladite image vidéo comprennent l'utilisation d'un système d'incrustation vidéo en direct.

22. Dispositif selon la revendication 16, dans lequel ledit timbre est un icône.

23. Dispositif selon la revendication 22, dans lequel ledit icône inclut une information de parrain publicitaire.

24. Dispositif selon la revendication 16, dans lequel ledit timbre est une image fantôme dudit premier concurrent.

25. Dispositif selon la revendication 16, dans lequel ladite image vidéo est transmise dans le réseau Internet par l'intermédiaire d'un train de données vidéo.

26. Dispositif selon la revendication 25, dans lequel ledit timbre comprend un bouton surexposé.

27. Dispositif selon la revendication 26, dans lequel lorsque ledit bouton surexposé est activé par un spectateur, une information concernant le premier concurrent est affichée.

28. Dispositif selon la revendication 26, dans lequel lorsque ledit bouton surexposé est activé par un spectateur, une information concernant un parrain publicitaire est affichée.

29. Procédé selon la revendication 16, dans lequel ledit timbre se transforme morphologiquement d'un icône en une image.

30. Procédé selon la revendication 16, dans lequel ledit timbre se transforme morphologiquement d'une image en un icône.
